# EUROPÄISCHE PATENTANMELDUNG

(11) **EP 3 836 325 A1**
(43) Veröffentlichungstag der Anmeldung: **16.06.2021**
(21) Anmeldenummer: 20212367.5
(22) Anmeldetag: 08.12.2020
(51) Int. Cl.: H02G 3/04, B29C 48/00, F16L 11/12, G09F 3/00, H01B 7/36, G02B 6/44

(54) **ROHRBÜNDEL UND ROHRSYSTEM MIT EINEM SOLCHEN ROHRBÜNDEL**

(30) Priorität: 12.12.2019 DE 202019106920 U
(71) Anmelder: REHAU AG + Co, 95111 Rehau (DE)
(72) Erfinder: Erdorf, Stefan, 90574 Roßtal (DE)

(57) **Zusammenfassung**

Die vorliegende Erfindung betrifft ein Rohrbündel (1), umfassend eine Anzahl an Rohren (2) aus Polymermaterial, die in einer Hülle (3) aus Polymermaterial angeordnet sind, wobei wenigstens ein Rohr (2) an oder in seiner Außenoberfläche (2.1) eine Rohrkennzeichnung (2.5) aufweist, die sich wiederholend und zueinander beabstandet ausgebildet ist, und wobei die Hülle (3) an oder in ihrer Außenoberfläche (3.1) eine Hüllenkennzeichnung (3.5) aufweist, die sich wiederholend und zueinander beabstandet ausgebildet ist.

## Beschreibung

Die Erfindung betrifft ein Rohrbündel, bei dem mehrere Rohre in einer Hülle angeordnet sind.
Weiterhin betrifft die Erfindung ein Rohrsystem mit einem solchen Rohrbündel.

Aus dem Stand der Technik sind mehrlumige Kabelschutzrohre bekannt, die dazu dienen, Kabel für die Energie- oder Datenleitung beim Eingraben ins Erdreich zu schützen. Durch das Vorhandensein mehrerer Rohre kann so eine einfache Zuordnung der einzelnen Kabel, beispielsweise im Hinblick auf eine Verteilerstation / einen Knotenpunkt oder eine Endstelle vorgenommen werden. Es ist bekannt, diese Art von Rohren durch Extrusion einzelner Polymerrohre, auf die eine Hülle aufextrudiert wird und die die Rohre umhüllt, herzustellen.

Inzwischen gibt es bei der Verlegung und beim Einziehen bzw. Einblasen der Kabel für die Energie- oder Datenleitungen neue Techniken, wozu es einer Weiterentwicklung der bekannten Rohrbündel bedarf.

Nachteilig ist bei den bekannten Lösungen, dass solche Rohre keine Kennzeichnung aufweisen, die durch die neuen Techniken genutzt werden können, um das Einziehen bzw. Einblasen der Kabel für die Energie- oder Datenleitungen in das Rohrbündel ganz erheblich zu erleichtern.

Hier setzt die Erfindung ein, die es sich zur Aufgabe gemacht hat, die Nachteile des Standes der Technik zu überwinden und ein Rohrbündel zur Verfügung zu stellen, das gekennzeichnet ist, wobei die Kennzeichnungen genutzt werden können, um ein einfacheres und vorteilhafteres Einziehen bzw. Einblasen der Kabel für die Energie- oder Datenleitungen in das Rohrbündel zu ermöglichen.
Eine weitere Aufgabe der Erfindung ist es, ein Rohrsystem anzugeben, welches eine einfachere Installation von Energie- oder Datenleitungen erlaubt.

Zur Lösung der ersten Aufgabe wird ein Rohrbündel mit den Merkmalen des Anspruchs 1 vorgeschlagen.
Im Rahmen der Erfindung wurde erkannt, dass ein Rohrbündel die gestellte Aufgabe vollumfänglich löst, wenn vorgesehen ist, dass das Rohrbündel, das aus einer Anzahl von Rohren besteht, die in einer Hülle angeordnet sind, so ausgestaltet ist, dass wenigstens ein Rohr an oder in seiner Außenoberfläche eine Rohrkennzeichnung aufweist, die sich wiederholend und zueinander beabstandet ausgebildet ist, und wobei die Hülle an oder in ihrer Außenoberfläche eine Hüllenkennzeichnung aufweist, die sich wiederholend und zueinander beabstandet ausgebildet ist.

Weitere Ausführungen der Erfindung sind in den Unteransprüchen niedergelegt.

Es hat sich erfindungsgemäß gezeigt, dass die Anordnung einzelner Rohre in einer Hülle in der Art, dass wenigstens ein Rohr an oder in seiner Außenoberfläche eine Rohrkennzeichnung aufweist, die sich wiederholend und zueinander beabstandet ausgebildet ist, und wobei die Hülle an oder in ihrer Außenoberfläche eine Hüllenkennzeichnung aufweist, die sich wiederholend und zueinander beabstandet ausgebildet ist, die Möglichkeit eröffnet, dass die nachfolgende Installation von Energie- oder Datenleitungen in diesen Rohren erheblich erleichtert ist.

Auf diese Weise kann ein Rohrbündel bereitgestellt werden, der wesentliche Vorteile mit sich bringt.
Da die Rohre, die in der Hülle aufgenommen sind, und die Hülle selbst Kennzeichnungen aufweisen, und zwar derart, dass wenigstens ein Rohr an oder in seiner Außenoberfläche eine Rohrkennzeichnung aufweist, die sich wiederholend und zueinander beabstandet ausgebildet ist, und dass die Hülle an oder in ihrer Außenoberfläche eine Hüllenkennzeichnung aufweist, die sich wiederholend und zueinander beabstandet ausgebildet ist, können aus den Kennzeichnungen Informationen entnommen werden, die hilfreich genutzt werden können, um beim Aufbau eines Rohrsystems, insbesondere beim Aufbau eines Rohrsystems für ein Telekommunikationssystem, beim Betrieb des Rohrsystems und bei Wartungsarbeiten, Reparaturen, Ergänzungen, etc. diese Informationen gezielt für Dokumentationen dieses Systems zu nutzen.

In einer vorteilhaften Weiterbildung der Erfindung kann vorgesehen sein, dass das Rohrbündel derartig ausgestaltet sein kann, dass die Rohrkennzeichnung und / oder die Hüllenkennzeichnung maschinenlesbar ausgebildet ist.
Durch das Ausbilden einer maschinenlesbaren Rohrkennzeichnung gelingt es in einfacher Weise, Informationen von der Rohrkennzeichnung in eine Datenverarbeitungsanlage einzulesen und dort weiterzuverarbeiten. Insbesondere kann so ohne großen Aufwand eine Datensammlung von Informationen der Rohrkennzeichnung aufgebaut werden.
Durch das Ausbilden einer maschinenlesbaren Hüllenkennzeichnung gelingt es in einfacher Weise, Informationen von der Hüllenkennzeichnung in eine Datenverarbeitungsanlage einzulesen und dort weiterzuverarbeiten. Insbesondere kann so ohne großen Aufwand eine Datensammlung von Informationen der Hüllenkennzeichnung aufgebaut werden.
Solche Datensammlungen können dann zu verschiedenen Zwecken eingesetzt und ausgewertet werden.

Als sehr günstig kann sich bei der vorliegenden Erfindung erweisen, wenn das Rohrbündel so ausgebildet ist, dass die Rohrkennzeichnung Informationen enthält, die die Art des Rohres beschreiben, die Produktionsdaten und / oder Qualitätsdaten des Rohres umfassen, und die Längenangaben des Rohres umfassen, und / oder die Hüllenkennzeichnung Informationen enthält, die die Art der Hülle beschreiben, die Produktionsdaten und / oder Qualitätsdaten der Hülle umfassen, und die Längenangaben der Hülle umfassen.
Auf diese Weise können Informationen gespeichert und zur Verfügung gestellt werden, durch die jedes einzelne Rohr des Rohrbündels identifizierbar ist, und die die Art und die Abmessungen sowie weitere Charakteristika und das Produktionsdatum des Rohres bzw. der Hülle, die Art und Chargennummer des verwendeten Polymermaterials, die Maschine, auf der produziert wurde, die bei der Produktion vorgegebenen und ermittelten Qualitätsparameter, und eine laufende Längenangabe, sowie auch andere umfassen.
Auch ist so das Rohrbündel mit Hilfe der Hüllenkennzeichnung identifizierbar.

Die vorliegende Erfindung kann sehr praktikabel aufgewertet werden, wenn vorgesehen ist, dass das Rohrbündel die Rohrkennzeichnung in regelmäßigen Abständen in oder an der Außenoberfläche des Rohres und die Hüllenkennzeichnung in regelmäßigen Abständen in oder an der Außenoberfläche der Hülle ausbildet.
Durch die regelmäßige Ausbildung von Rohrkennzeichnungen und Hüllenkennzeichnungen kann das das Rohrbündel installierende Personal schnell und ohne sich aufwendig entlang der Hülle und / oder des Rohres oder der Rohre orientieren zu müssen, eine solche Kennzeichnung auffinden und die dadurch bereitgestellten Informationen in einen Datenspeicher oder in eine Datenverarbeitungsanlage einlesen.
Eine solche regelmäßige Ausbildung einer Rohrkennzeichnung und einer Hüllenkennzeichnung kann beispielsweise jeweils nach 20 cm (Zentimeter) oder nach 50 cm (Zentimeter) oder nach 100 cm (Zentimeter) erfolgen, wobei natürlich auch andere Abstände der regelmäßig ausgebildeten Rohrkennzeichnung und Hüllenkennzeichnung möglich sind.

In einer bevorzugten Fortbildung der Erfindung kann vorgesehen sein, dass das Rohrbündel derart ausgestaltet ist, dass die Rohrkennzeichnung in Form einer alphanumerischen Darstellung oder in Form eines Strichcodes oder in Form eines QR-Codes oder in Form einer gespeicherten Information in einem RFID-Element oder in einer Kombination der vorgenannten Darstellungen und Informationen ausgebildet ist, und die die Hüllenkennzeichnung in Form einer alphanumerischen Darstellung oder in Form eines Strichcodes oder in Form eines QR-Codes oder in Form einer gespeicherten Information in einem RFID-Element oder in einer Kombination der vorgenannten Darstellungen und Informationen ausgebildet ist. Durch diese Maßnahme kann das installierende Personal ohne großen Aufwand mit Hilfe eines Lesegerätes, welches Informationen von einer alphanumerischen Darstellung oder von einem Strichcode oder von einem QR-Code oder von einem RFID-Element gewinnen kann, diese Informationen in einen Datenspeicher oder in eine Datenverarbeitungsanlage einlesen.
Insbesondere kann auch vorgesehen sein, dass die Informationen mit Hilfe eines Mobilphones gelesen werden können. Auf diese Weise kann eine einfache und schnelle Ermittlung und Verarbeitung der Informationen durchgeführt werden. Weiterhin ist es mit einem Mobilphone möglich, Fotoaufnahmen anzufertigen, um das Rohrbündel, dessen Verlegung, die herzustellenden Anschlüsse an die einzelnen Rohre des Rohrbündels und anderes mehr fotografisch zu dokumentieren.

Gemäß der vorliegenden Erfindung kann die Rohrkennzeichnung an oder in seiner Außenoberfläche ausgebildet sein. Hierzu kann vorgesehen sein, dass die Rohrkennzeichnung in Form einer alphanumerischen Darstellung oder in Form eines Strichcodes oder in Form eines QR-Codes auf die Oberfläche des Rohres beispielsweise aufgedruckt oder anderweitig aufgebracht ist. Im Fall eines RFID-Elements kann dieses auf der Oberfläche des Rohres beispielsweise aufgeklebt sein, oder es ist bei der Produktion des Rohres in seiner Außenoberfläche - d. h. unmittelbar unter der Außenoberfläche - positioniert.

Analog kann gemäß der vorliegenden Erfindung die Hüllenkennzeichnung an oder in ihrer Außenoberfläche ausgebildet sein. Hierzu kann vorgesehen sein, dass die Hüllenkennzeichnung in Form einer alphanumerischen Darstellung oder in Form eines Strichcodes oder in Form eines QR-Codes auf die Oberfläche der Hülle beispielsweise aufgedruckt oder anderweitig aufgebracht ist. Im Fall eines RFID-Elements kann dieses auf der Oberfläche der Hülle beispielsweise aufgeklebt sein, oder es ist bei der Produktion der Hülle in ihrer Außenoberfläche - d. h. unmittelbar unter der Außenoberfläche - positioniert.

Es kann sich bei der vorliegenden Erfindung als vorteilhaft ergeben, wenn vorgesehen ist, dass die Längeninformation des Rohrbündels, die aus der maschinenlesbaren Hüllenkennzeichnung ermittelbar ist, und die Längeninformation des Einzelrohrs, die aus der maschinenlesbaren Rohrkennzeichnung ermittelbar ist, derart korrespondieren, dass die aus der maschinenlesbaren Hüllenkennzeichnung ermittelte Längeninformation gleich der aus der maschinenlesbaren Rohrkennzeichnung ermittelten Längeninformation ist.
Dadurch kann das Verfahren zum Bau eines Rohrsystems einfacher gestaltet werden, was Zeit- und Kosteneinsparungen mit sich bringt.

Es kann so auch leicht eine Identifikation von Einzelrohren eines Rohrbündels vorgenommen werden, wenn diese mit Einzelrohren eines anderen Rohrbündels verbunden werden sollen, und so eine exakte Dokumentation über die miteinander verbundenen Einzelrohre zu ermöglichen.

Die bei der Installation eines Rohrbündels, beispielsweise beim Eingraben in den Erdboden, in einen Datenspeicher oder in eine Datenverarbeitungsanlage eingelesenen Informationen von einer alphanumerischen Darstellung oder von einem Strichcode oder von einem QR-Code oder von einem RFID-Element können dazu genutzt werden, eine Bestandsaufnahme über die in einer Region verlegten Rohrbündel anzufertigen. Darüber hinaus können die Informationen mit Vorteil genutzt werden, um bei einem identifizierten Rohr eine Länge anzugeben von einem ersten Ende mit einer Rohrkennzeichnung bis zu einem zweiten Ende mit einer Rohrkennzeichnung. Das installierende Personal hat somit sofort eine Längenangabe eines identifizierten Rohres durch Auslesen der Informationen an den beiden Rohrkennzeichnungen vorliegen. Gleiches gilt für die Hülle mit einem ersten und einem zweiten Ende und den jeweils zugeordneten Hüllenkennzeichnungen.

Die Längenangabe kann bei der Installation von Energie- oder Datenleitungen in den Rohren des Rohrbündels vorteilhaft genutzt werden, um eine Aussage hinsichtlich des sachgerechten Einbaus der Energie- oder Datenleitungen in die Rohre abzuleiten.

Das erfindungsgemäße Rohrbündel kann derart hergestellt werden, dass die zusammenzufassenden und zu umhüllenden Rohre zusammengeführt und durch ein geeignet gebautes Extrusionswerkzeug geführt werden, wobei Polymermaterial als Hülle um das Bündel aus Rohren herumgespritzt wird.

Es kann vorteilhaft sein, wenn zumindest ein Teil der Rohre des Rohrbündels vor der Umspritzung der Hülle gezielt verdrillt werden, um dem Rohrbündel eine erhöhte Knickfestigkeit zu verleihen, da dadurch eine Erleichterung bei Verlegung und Einbau des Rohrbündels erreicht werden kann.

Auch kann das Verdrillen von Rohren den Vorteil mit sich bringen, dass der Rohrbündel nach dem Abrollen von der Haspel schneller das erzwungene Formgedächtnis des aufgerollten Zustandes verliert und mit weniger Aufwand in eine gestreckte Form gebracht werden kann.

Als Polymermaterial für Rohre und Hülle können beliebige Thermoplaste ausgewählt sein.

Zu beachten ist, dass bei der Umspritzung der Rohre mit der Hülle es zu keiner festhaftenden Verbindung der Rohre mit der Hülle kommt.
Hierzu kann eine geeignete Polymerauswahl, eine geeignete Polymerrezeptierung oder eine geeignete Verfahrensführung bei der Umspritzung vorgesehen sein.
Es ist auch möglich, Trennmittel zwischen Rohren und Hülle zumindest abschnittsweise anzuwenden, die ein solches nachteiliges Anhaften verhindern, da dadurch dieser Vorteil der beschriebenen Erfindung verloren geht.

Bevorzugte Polymermaterialien sind in diesem Zusammenhang:
- für Rohre
   Polypropylen, Polyvinylchlorid, Polyethylen, Polyurethan, Polyamid,
- für die Hülle
   Polyamid, Polyvinylchlorid, Polyethylen, Polypropylen, Polyurethan.

Es hat sich als günstig herausgestellt, wenn die Hülle des Rohrbündels aus einem abriebbeständigen Polymermaterial hergestellt ist, oder wenn sie mit einer Schicht versehen ist, die abriebbeständig ist.
Hierfür eignen sich neben den vorstehend aufgezählten Polymermaterialien auch solche, die vernetzt sind.
Auch durch die Zugabe von geeigneten Füllstoffen, wie beispielsweise Bariumsulfat oder Glasfasern kann eine Verbesserung der Abriebbeständigkeit der Hülle erzielt werden.

Es kann weiterhin vorgesehen sein, dass die Außenschicht der Hülle mit Gleiteigenschaften versehen wird, um den Einbau des Rohrbündels bei der Anwendung zu vereinfachen.

Um beispielsweise elektrostatische Ladungen von der Oberfläche der Hülle zu entfernen, kann weiterhin vorgesehen sein, in die Hülle Mittel einzuarbeiten, die eine solche Ladung abführen.
Hierzu eignen sich einerseits leitfähige Zusätze in das Polymermaterial der Hülle auf Basis leitfähiger Teilchen, aus beispielhaft Kohlenstoff oder Metall.
Solche Leitfähigkeitsadditive, wie beispielsweise Leitruß, Leitfähigkeitsgraphite, Metallpartikel, Kohlenstoff-Nanoröhrchen, PAN-Kohlenstoff-Fasern, vernickelte Kohlenstoff-Fasern, recyclierte Kohlenstoff-Fasern, metallbeschichtete Glasfasern, Keramik-Whisker oder ähnliche erhöhen die Leitfähigkeit des Polymermaterials.
Die Teilchen sind partikelförmig und besitzen sphärische und / oder faserförmige und / oder blättchenförmige und / oder stäbchenförmige Geometrien.

Es kann auch eine Leitfähigkeit durch den Einsatz leitfähiger Polymere erreicht werden, diese umfassen beispielsweise Polyanilin, Polyacetylen, Polythiophen, Polyphenylen oder Polypyrrol.

Weiterhin kann auch vorgesehen sein, Leiter in der Hülle in Form von Litzen oder Drähten anzuordnen, um damit unerwünschte Ladungen abzuführen.

Schließlich kann das Einarbeiten von Leitern in die Hülle auch dazu genutzt werden, einen Schaden der Hülle anzuzeigen, wenn der Leiter als Signalleitung benutzt wird und durch einen Schaden eine Änderung seiner Leitfähigkeit erfährt.
Eine Signalleitung kann aber auch benutzt werden, um entfernt ein Ventil oder ähnliches am Ende eines Rohres zu steuern.

Um das Rohrbündel zu isolieren, kann vorgesehen sein, dass die Hülle aus Polymermaterial zumindest abschnittsweise aus geschäumtem Polymermaterial besteht.
Dabei kann der Polymerschaum durch chemische oder physikalische Schäumung hergestellt sein.

Auch kann vorgesehen sein, dass zum Erreichen einer verbesserten Isolierwirkung ein Schichtaufbau der Hülle gewählt wird, wobei verschiedene Schichten, die Polymermaterial in geschäumter oder ungeschäumter Form, aber auch Metall- und andere Folien oder Filamente bzw. Textilien beinhalten, übereinandergelegt sein können.

Es kann vorgesehen sein, Rohre für das Rohrbündel einzusetzen, die armiert sind, also über ganz besondere Festigkeiten verfügen.
Als Armierung kann dabei ein Faden aus Textil oder ein Filament aus Draht oder Polymermaterial oder Kohlenstoff vorgesehen sein.
Auch eine Mischzusammensetzung der vorgenannten Armierstoffe kann eingesetzt werden.

Das Rohr kann darüber hinaus auch einen Schichtaufbau aufweisen.

Zur Verbesserung und Erhöhung der Flexibilität des Rohrbündels gemäß der vorliegenden Erfindung kann vorgesehen sein, dass die Innenwand der Hülle, die die gebündelten Rohre umgibt, und / oder die Außenwände der Rohre aus einem Material bestehen, das niedrige Reibung aufweist.
Hierzu können besondere Polymermaterialien ausgewählt sein, wie beispielsweise Polymamid (PA) oder Teflon (PTFE), es können aber auch andere Reibungspartner mit niedriger Gleitreibung - wie Polyethylen (PE) - eingesetzt sein.

Es ist weiterhin im Rahmen der vorliegenden Erfindung möglich, die Oberfläche der Rohre so zu gestalten, dass diese möglichst wenig Berührungsfläche mit der Innenwand der Hülle, die sie umfasst, ausbilden.

Dazu kann vorgesehen ein, dass die Oberfläche der Rohre uneben gestaltet ist, also beispielsweise Riefen aufweist, wobei die Erhebungen dann spitz ausgebildet sein können.
In einer anderen Ausführungsform kann auch vorgesehen sein, dass Erhebungen in regelmäßiger oder unregelmäßiger Anordnung auf der Oberfläche der Rohre ausgebildet sind, wobei dann nur die Spitzen der Erhebungen Kontaktfläche zur Hülle ausbilden.

Diese Maßnahmen reduzieren die "innere Reibung" des Rohrbündels der vorliegenden Erfindung ganz erheblich.

Alternativ kann vorgesehen sein, dass die Oberflächen, die reibend in Berührung kommen, beschichtet sind. Hierzu sind Beschichtungssysteme geeignet, die aus dem Stand der Technik bekannt sind und im Sprüh-, Tauch-, Streich-, Walz- oder Flutverfahren auf die Oberfläche aufgetragen werden.
So sind beispielsweise speziell rezeptierte Lacke dafür geeignet, die Polytetrafluorethylen-Teilchen (PTFE) enthalten und die Reibung dadurch erniedrigen.
Es sind aber auch Vakuumverfahren heranziehbar, wenn es um die Beschichtung einer Oberfläche unter Abscheidung einer sehr dünnen reibungsarmen Schicht geht.

Es kann aber auch vorgesehen sein, dass durch Zugabe eines Gleitmittels in Form eines geeigneten Fettes oder Öles oder eines Siliconöles ein Gleitfilm auf den reibenden Oberflächen erzeugt wird.

Die derart reduzierte Reibung verbessert den Gebrauchswert des Rohrbündels und erhöht dessen Einsatzdauer.

Die zweite Aufgabe der Erfindung erfährt ihre Lösung durch den Gegenstand des Anspruchs 8.
Es wurde im Rahmen der vorliegenden Erfindung gefunden, dass ein Rohrsystem, insbesondere ein Rohrsystem für den Bau eines Telekommunikationssystems, dann ganz besonders technisch aufgewertet ist, wenn es wenigstens ein Rohrbündel gemäß vorstehender Beschreibung umfasst.
Ein solches Rohrbündel erleichtert dem installierenden Personal die Installation von Energie- oder Datenleitungen in das Rohrsystem erheblich, vermeidet Fehler bei der Installation und spart Kosten ein.

Anwendungen findet das erfindungsgemäße Rohrbündel als Versorgungsmittel im Bereich der Telekommunikationstechnik, der Haustechnik und des Maschinenbaus.
So kann das Rohrbündel in Leerrohre eingezogen werden, es ist aber auch vorteilhaft im Rahmen der Sanierung von Gebäuden einzusetzen.
Die vorliegende Erfindung stellt damit ein Rohrbündel bereit, der äußerst flexibel an verschiedene Ansprüche anpassbar vorteilhaft genutzt werden kann.

Es erschließen sich dem Fachmann in nicht erfinderischer Weise ohne weiteres diverse weitere Gestaltungsmöglichkeiten, die vom Erfindungsgedanken umfasst sind.

Die vorliegende Erfindung wird anhand der beigefügten Figur näher beschrieben.

Hierzu zeigt:

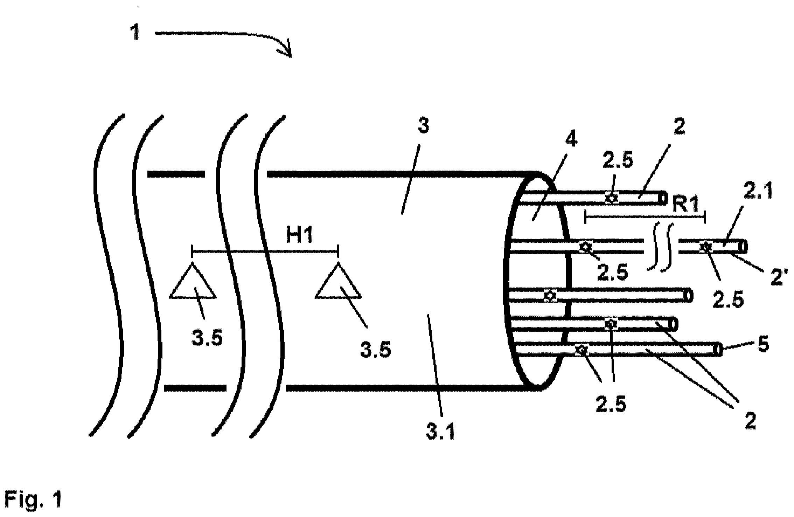

- Fig. 1: eine schematische perspektivische Ansicht eines Rohrbündels mit aus dem Rohrbündel herausragenden einzelnen Rohren.

In der Fig. 1 ist in einer schematischen Darstellung ein Rohrbündel 1 in einer perspektivischen Ansicht gezeigt.
Das Rohrbündel 1 umfasst eine Hülle 3 und eine Anzahl von Rohren 2, die aus dem Hüllenlumen 4 der Hülle 3 herausragen. Exemplarisch sind fünf Rohre 2 dargestellt.
Es versteht sich aber, dass das Hüllenlumen 4 im Allgemeinen die maximal darin aufnehmbare Anzahl an Rohren 2 aufweist. Dies können 12, 16, 18, 20 oder mehr Rohre 2 sein. Auf der Außenoberfläche 3.1 der Hülle 3 sind Hüllenkennzeichnungen 3.5 vorgesehen, die sich wiederholend und zueinander beabstandet ausgebildet sind. Sofern die Hüllenkennzeichnungen 3.5 auf der Außenoberfläche 3.1 der Hülle 3 zu ihren jeweiligen direkten Nachbarn jeweils gleich beabstandet sind, ist ein Hüllenkennzeichnungsabstand H1 zwischen zwei benachbarten Hüllenkennzeichnungen 3.5 vorgesehen.
Die Hülle 3 besteht aus oder enthält ein Polymermaterial ist von rohrförmiger Gestalt. Jedes Rohr 20 weist eine Außenoberfläche 2.1 auf.
Auf der Außenoberfläche 2.1 eine jeden Rohres 2 sind Rohrkennzeichnungen 2.5 vorgesehen, die sich wiederholend und zueinander beabstandet ausgebildet sind. Sofern die Rohrkennzeichnungen 2.5 auf der Außenoberfläche 2.1 des Rohres 2 zu ihren jeweiligen direkten Nachbarn jeweils gleich beabstandet sind, ist ein Rohrkennzeichnungsabstand R1 zwischen zwei benachbarten Rohrkennzeichnungen 2.5 vorgesehen, was exemplarisch am Rohr 2' gezeigt ist.

Jedes Rohr 2 besteht aus oder enthält ein Polymermaterial.
Jedes Rohr 2 weist ein Rohrlumen 5 auf, das geeignet ist, darin eine Energie- oder Datenleitung zu installieren.

### Bezugszeichenliste

- 1: Rohrbündel
- 2: Rohr
- 2': Rohr
- 2.1: Außenoberfläche
- 2.5: Rohrkennzeichnung
- 3: Hülle
- 3.1: Außenoberfläche
- 3.5: Hüllenkennzeichnung
- 4: Hüllenlumen
- 5: Rohrlumen
- H1: Hüllenkennzeichnungsabstand
- R1: Rohrkennzeichnungsabstand

## Patentansprüche

1. Rohrbündel (1), umfassend eine Anzahl an Rohren (2) aus Polymermaterial, die in einer Hülle (3) aus Polymermaterial angeordnet sind, wobei wenigstens ein Rohr (2) an oder in seiner Außenoberfläche (2.1) eine Rohrkennzeichnung (2.5) aufweist, die sich wiederholend und zueinander beabstandet ausgebildet ist, und wobei die Hülle (3) an oder in ihrer Außenoberfläche (3.1) eine Hüllenkennzeichnung (3.5) aufweist, die sich wiederholend und zueinander beabstandet ausgebildet ist.

2. Rohrbündel (1) nach Anspruch 1, **dadurch gekennzeichnet, dass** die Rohrkennzeichnung (2.5) und / oder die Hüllenkennzeichnung (3.5) maschinenlesbar ausgebildet ist.

3. Rohrbündel (1) nach Anspruch 1 oder 2, **dadurch gekennzeichnet, dass** die Rohrkennzeichnung (2.5) Informationen enthält, die die Art des Rohres (2) beschreiben, die Produktionsdaten und / oder Qualitätsdaten des Rohres (2) umfassen, und die Längenangaben des Rohres (2) umfassen, und / oder die Hüllenkennzeichnung (3.5) Informationen enthält, die die Art der Hülle (3) beschreiben, die Produktionsdaten und / oder Qualitätsdaten der Hülle (3) umfassen, und die Längenangaben der Hülle (3) umfassen.

4. Rohrbündel (1) nach einem der vorangehenden Ansprüche, **dadurch gekennzeichnet, dass** die Rohrkennzeichnung (2.5) in regelmäßigen Abständen in oder an der Außenoberfläche (2.1) des Rohres (2) und die Hüllenkennzeichnung (3.5) in regelmäßigen Abständen in oder an der Außenoberfläche (3.1) der Hülle (3) ausgebildet sind.

5. Rohrbündel (1) nach einem der vorangehenden Ansprüche, **dadurch gekennzeichnet, dass** die Rohrkennzeichnung (2.5) und die Hüllenkennzeichnung (3.5) in Form einer alphanumerischen Darstellung oder in Form eines Strichcodes oder in Form eines QR-Codes oder in Form einer gespeicherten Information in einem RFID-Element oder in einer Kombination der vorgenannten Darstellungen und Informationen ausgebildet ist.

6. Rohrbündel (1) nach einem der vorangehenden Ansprüche, **dadurch gekennzeichnet, dass** das Rohr (2) und die Hülle (3) aus einem thermoplastischem Material bestehen oder ein solches enthalten.

7. Rohrbündel (1) nach Anspruch 6, **dadurch gekennzeichnet, dass** das Rohr (2) bevorzugt aus Polypropylen oder Polyvinylchlorid oder Polyethylen oder Polyurethan oder Polyamid enthält, und / oder dass die Hülle (3) bevorzugt aus Polyamid oder Polyvinylchlorid oder Polyethylen oder Polypropylen oder Polyurethan enthält.

8. Rohrsystem, insbesondere für den Bau eines Telekommunikationssystems, mit wenigstens einem Rohrbündel (1) nach einem der Ansprüche 1 bis 7.
